# EUROPEAN PATENT APPLICATION

(11) **EP 4 737 315 A1**
(43) Date of publication of application: **06.05.2026**
(21) Application number: 25152731.3
(22) Date of filing: 20.01.2025
(51) Int. Cl.: B64D 11/06, B29C 70/34, B29C 70/44, B29C 70/46

(54) **MANUFACTURING METHOD OF INTEGRALLY FORMED AIRCRAFT SEAT LEG, STRUCTURE THEREOF AND AIRCRAFT SEAT**

(30) Priority: 30.10.2024 TW 113141688
(71) Applicant: Surewin Worldwide Limited, Apia (WS)
(72) Inventor: LU, Feng-Chang, Taichung City (TW); HUANG, Chung-Li, Taichung City (TW); HONG, Jin-San, Taichung City (TW)
(74) Representative: Straus, Alexander

(57) **Abstract**

The present invention relates to a manufacturing method of an integrally formed aircraft seat leg, which includes taking a plurality of carbon fiber prepregs, and performing a folding process, a cutting process, a lay-up process, a preforming process and a thermal curing process in order. After the finished product cools down, remove the mold to obtain an aircraft seat leg (20). The aircraft seat leg (20) manufactured by this manufacturing method has no joint in structure, which is an integrally formed and structurally hollow design. Compared with the structure requiring multiple elements for assembly, the present invention has advantages of high structural strength and light weight.

## Description

### BACKGROUND OF THE INVENTION

### 1. Field of the Invention

The present invention relates to aircraft seat legs and more particularly, to a manufacturing method of an integrally formed aircraft seat leg, which uses folding, cutting and lay-up steps to enable carbon fiber prepregs having long fiber structure to be manufactured into a one-piece aircraft seat leg which has high strength and low weight and applicable to an aircraft seat.

### 2. Description of the Related Art

In response to business and travel needs, many people choose to take flights when traveling to and from countries around the world. Aviation safety is an issue that all airlines and aircraft manufacturers attach great importance to. Therefore, safety consideration is required for all equipment before it is used on the aircraft. The main considerations for the materials of the equipment in the cabins are usually fire resistance, light weight and high strength. At present, composites of glass fiber, metal or carbon fiber are mostly used as the materials for the main structure. The composites of glass fiber or carbon fiber are added with fire-retardant materials, and can be reduced in weight and increased in strength through structural arrangement, thereby quite suitable for use in aircraft interiors. Wherein, carbon fiber is advantageous in weight and strength when compared with glass fiber, so applying carbon fiber to the seat frame in the aircraft cabin can improve the safety of the aircraft.

Due to the complex shape of the seat frame, when it is made of carbon fiber, it is usually made of thermoplastic or thermosetting carbon fiber composites. US Patent No. 10112720 B2 disclosed an aircraft seat leg using thermoplastic carbon fiber composite. At first, a support element is formed through the thermoplastic curing process. Then, a reinforcing element is formed of thermoplastic plastic material on the support element. The reinforcing element serves as a connecting structure to assemble a first reinforcement loop and a second reinforcement loop. US Patent No. 11584274 B1 disclosed a modular aircraft seat leg, which is composed of a first seat leg member, a second seat leg member, a size coupling member, and a seat tube receptor. The components can be made of metallic or nonmetallic materials. The first seat leg member and the second seat leg member are combined to each other through the size coupling member, and then the second seat leg member is fixed with the seat tube receptor, so that the aircraft seat leg is formed.

Thermoplastic materials have the property of being convenient for shaping and manufacturing. But in terms of structural strength, thermosetting materials can perform better than thermoplastic materials. However, thermosetting materials are not easy for shaping. A plurality of components should be formed and then combined. Besides, it can be known from the above two patents that the current aircraft seat legs are mainly multi-piece assemblies. However, such multi-piece assembled structure has lower structural strength when compared with one-piece integral structure. Besides, the multi-piece structure is prone to assembly defects during the manufacturing process, which affect the quality of the finished product. If multiple inspections are performed, the manufacturing cost will increase significantly.

Therefore, the inventor made effort to think about how to provide a method which can use thermosetting materials to manufacture the aircraft seat leg, and the finished product is an integrally formed configuration, so that the whole seat leg has increased structural strength, thereby advantageous to the improvement of the aircraft cabin safety.

### SUMMARY OF THE INVENTION

In view of the above description that the existing aircraft seat legs still have many shortcomings in actual implementation and use, it is one of the objectives of the present invention to provide a manufacturing method of an integrally formed aircraft seat leg, and through this method one-piece aircraft seat leg is manufactured, which can have the advantages of high strength and light weight.

To attain the above objective, the present invention provides a manufacturing method of an integrally formed aircraft seat leg, which includes the steps of: A) taking a plurality of carbon fiber prepregs which have long fiber structure, a folding process being performed to the plurality of carbon fiber prepregs to make the plurality of carbon fiber prepregs preformed with stacking angles according to the bends of the external shape of an aircraft seat leg; B) performing a cutting process to the plurality of carbon fiber prepregs that have gone through the folding process; C) performing a lay-up process by stacking the plurality of carbon fiber prepregs in a jig according to the stacking design of the aircraft seat leg; D) performing a preforming process, in a mold, to the plurality of carbon fiber prepregs that have gone through the lay-up process; E) performing a thermal curing process by preheating and pre-pressurizing the mold with the plurality of carbon fiber prepregs, wherein the plurality of carbon fiber prepregs comprise thermoplastic material or thermosetting material, and then molding the plurality of carbon fiber prepregs by heating and pressurizing; and F) cooling down at room temperature and then removing the mold, thereby obtaining the aircraft seat leg, the aircraft seat leg being formed integrally and hollow in structure.

Preferably, the plurality of carbon fiber prepregs have the structure with unidirectional long fibers or woven long fibers. As a result, no matter it is the unidirectional or woven long fiber structure, it can be used to manufacture the aircraft seat leg and provide high-strength finished product of the aircraft seat leg.

Preferably, in the cutting process in the step B, the plurality of carbon fiber prepregs are cut according to the size of the stacking design of the aircraft seat leg, then numbered and marked with the stacking angles. As a result, the personnel for the subsequent steps can quickly stack the carbon fiber prepregs according to the numbering and the marked stacking angles, so as to increase the manufacturing efficiency and avoid position errors.

Preferably, in the thermal curing process in the step E, a heating and pressurizing machine is preheated to 130°C-220°C, and then the mold with the plurality of carbon fiber prepregs is placed into the heating and pressurizing machine to be preheated and pre-pressurized. As a result, rising the temperature of the mold to the predetermined working temperature is helpful to shorten the formation time on the machine and improve the producing efficiency.

Preferably, in the thermal curing process in the step E, the plurality of carbon fiber prepregs in the mold is pressurized by inflation with a pressure of 7-14 kg/cm², and heated by a temperature of 130°C-220°C. As a result, the inflation with the appropriate pressure can make the carbon fiber prepregs appressed to the surface of the mold, making the finished product after the heating have smoother appearance and hollow structure.

Preferably, in the step F, the mold and the plurality of carbon fiber prepregs are waited for cooling down at room temperature to a temperature of 60°C-80°C. As a result, letting the finished product naturally cool down in the mold can make the appearance of the finished product more complete.

It is another objective of the present invention to provide an aircraft seat leg, which includes a primary support frame having a support point and a plurality of support bars, an end of the plurality of support bars being connected to the support point; a secondary support frame connected to another end of a plurality of the support bars of the primary support frame; and two seat tube connectors formed at the primary support frame's a plurality of the support bars' ends connected with the secondary support frame, every seat tube connector having a connecting hole penetrating through the seat tube connector.

It is still another objective of the present invention to provide an aircraft seat, which includes an aircraft seat leg having a primary support frame, a secondary support frame and two seat tube connectors, the primary support frame including a support point and a plurality of support bars, an end of the plurality of support bars being connected to the support point, the secondary support frame being connected to another end of a plurality of the support bars of the primary support frame, the two seat tube connectors being formed at the primary support frame's a plurality of the support bars' ends connected with the secondary support frame, every seat tube connector having a connecting hole penetrating through the seat tube connector; two seat tubes inserted in the connecting holes of the two seat tube connectors of the aircraft seat leg respectively, the two seat tubes being fastened to the two seat tube connectors respectively; an armrest frame having an armrest portion and two assembling holes formed at the bottom side of the armrest portion, the armrest frame being sleeved onto the two seat tubes through the two assembling holes respectively; and a seat member having a seat bottom, a seat back connected with the seat bottom and a headrest connected with the seat back, two ends of the seat bottom being connected to the two seat tubes respectively.

Preferably, the outer surfaces of the two seat tubes are adhered to the inner surfaces of the two seat tube connectors. As a result, the aircraft seat leg can be directly connected with the seat tubes without drilling, that will not damage the structure of the aircraft seat leg.

Preferably, a plurality of positionally limiting loops are disposed on two sides of the two seat tube connectors. The plurality of positionally limiting loops are sleeved onto the two seat tubes and tightly abutted against two sides of the two seat tube connectors. As a result, the positionally limiting loops can increase the firmness of the seat tubes being fastened to the seat tube connectors, preventing the seat tubes from rotation or displacement resulted from insufficient adhering strength.

Preferably, the two seat tube connectors of the aircraft seat leg further has a plurality of fastening holes for the connection with the two seat tubes. As a result, the aircraft seat leg can be connected with the seat tubes in the fastening manner using pins or screws, that provides the relatively firmer fastening manner.

Preferably, the two seat tube connectors are further formed with fastening planes around every fastening hole. As a result, when the pins or screws are inserted in the fastening holes, the fastening planes are provided for the head portions of the pins or screws to be abutted thereon, that can increase the firmness of the pins or screws.

Preferably, the material of the two seat tubes is glass fiber, aluminum alloy or carbon fiber. As a result, the seat tube made of glass fiber or aluminum alloy has great buffering property, capable of absorbing the impact energy received by the aircraft seat. The seat tube made of carbon fiber has relatively better rigidity, that provides the aircraft seat relatively higher strength.

The aircraft seat leg manufactured by the manufacturing method of the present invention is an integrally formed one-piece element, which can be directly used as the seat leg to be combined with the seat tubes, the armrest frame and the seat member to compose the aircraft seat. It is quite convenient for the assembly in the aircraft cabin. Besides, the integrally formed design has no joint between the primary support frame, the secondary support frame and the seat tube connectors, bringing relatively higher strength to the entirety. The design with the hollow structure can also lower the weight of the whole seat leg, that is quite suitable for the aircraft with requirement in weight.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

FIG. 1 is a flow chart of a manufacturing method of an aircraft seat leg of the present invention.
FIG. 2 is a planar view of the aircraft seat leg of the present invention.
FIG. 3 is a schematic view of the combination of the aircraft seat leg of the present invention and seat tubes, also showing the part for being fixed to the floor.
FIG. 4 is a partially enlarged view of the combination of the aircraft seat leg of the present invention and the seat tube, showing the configuration that the seat tube connector is adhered to the seat tube.
FIG. 5 is a partially enlarged view of the combination of the aircraft seat leg of the present invention and the seat tube, showing the configuration that positionally limiting loops assist in fastening.
FIG. 6 is a partially enlarged view of the aircraft seat leg of the present invention, showing the configuration that the seat tube connector has fastening holes.
FIG. 7 is a partially enlarged view of the combination of the aircraft seat leg of the present invention and the seat tube, showing the configuration that the seat tube connector has the fastening holes.
FIG. 8 is a perspective view of the aircraft seat of the present invention.
FIG. 9 is a perspective view of the aircraft seat of the present invention from an angle other from that of FIG. 8.

### DETAILED DESCRIPTION OF THE INVENTION

First of all, it is to be mentioned that same or similar reference numerals used in the following embodiments and the appendix drawings designate same or similar elements or the structural features thereof throughout the specification for the purpose of concise illustration of the present invention. It should be noticed that for the convenience of illustration, the components and the structure shown in the figures are not drawn according to the real scale and amount, and the features mentioned in each embodiment can be applied in the other embodiments if the application is possible in practice. Besides, when it is mentioned that an element is disposed on another element, it means that the former element is directly disposed on the latter element, or the former element is indirectly disposed on the latter element through one or more other elements between aforesaid former and latter elements. When it is mentioned that an element is directly disposed on another element, it means that no other element is disposed between aforesaid former and latter elements.

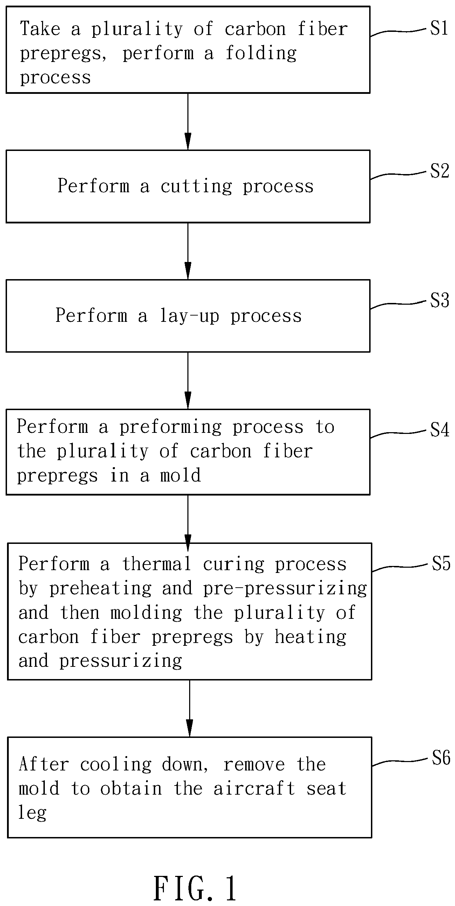

Referring to FIG. 1, FIG. 2, FIG. 8 and FIG. 9, an aircraft seat leg 20 of an aircraft seat 10 of the present invention is primarily made of thermosetting carbon fiber prepregs which is made of carbon fiber material with long fiber structure and thermosetting resin in an impregnation machine. The carbon fiber prepregs have stickiness at room temperature, that is unfavorable for the operation. Therefore, the carbon fiber prepregs are usually stored in low-temperature environment, and will be taken out when having to be used. When performing the molding of the carbon fiber prepregs, the external shape of the product is generally subjected to stress analysis in computer aided design (CAD) software, and then the optimal stacking design is planned based on the result of the stress analysis, such that the required amount of material can be known.

Step S1: Take a plurality of carbon fiber prepregs. A folding process is performed to the carbon fiber prepregs to preform stacking angles by folding according to the bends of the external shape of an aircraft seat leg 20. The folding is designed and implemented according to each stacking angle, so as to reduce material waste and cost.

Step S2: Perform a cutting process. The carbon fiber prepregs are cut according to the size of the stacking design, then numbered and marked with the stacking angles. Every piece of carbon fiber prepreg can be classified according to the numbering.

Step S3: Perform a lay-up process. The carbon fiber prepregs are stacked in coordination with a jig according to the stacking design of the aircraft seat leg 20. When stacking, the personnel only need to place the carbon fiber prepregs, according to the numbering and marked stacking angles of the carbon fiber prepregs, at the corresponding positions, and stack them piece by piece. In this way, the efficiency of performing the lay-up process can be increased.

Step S4: Perform a preforming process. The carbon fiber prepregs that have gone through the lay-up process are put into a lower die of a mold. Let the carbon fiber prepregs fit the lower die, and then put an upper die of the mold thereon. At this moment, the carbon fiber prepregs are attached to the inner surface of the mold, and have a hollow non-solid configuration. The mold is also provided therein with an air intake pipe, allowing the injected air to flow to the inside of the carbon fiber prepregs.

Step S5: Perform a thermal curing process. A heating and pressurizing machine is preheated to 130°C-220°C (130°C-160°C is preferred). Then, the mold with the carbon fiber prepregs is sent into the heating and pressurizing machine. Meanwhile, perform inflation with an inflating pressure of 7-14 kg/cm² (8-12 kg/cm² is preferred) through the air intake pipe of the mold to fill the hollow region inside the carbon fiber prepregs with gas, making the carbon fiber prepregs further appressed to the inner surface of the mold. It takes about 10 minutes for the mold to be preheated to the working temperature. After 10-60 minutes of operation, the carbon fiber prepregs can be molded according to the shape of the mold. The operation time depends on the size of the finished product. The molding temperature in this embodiment is 150°C, which makes the carbon fiber prepregs cured in medium-temperature curing environment so that the molded finished product has relatively better performance in both strength and rigidity. The working temperature depends on the property of the thermosetting resin. Besides, when the pressure is larger than 14 kg/cm², the thermosetting resin will be distributed unevenly. When the pressure is smaller than 8 kg/cm², it will cause low strength after the molding. Therefore, the working pressure in this embodiment is 7-14 kg/cm².

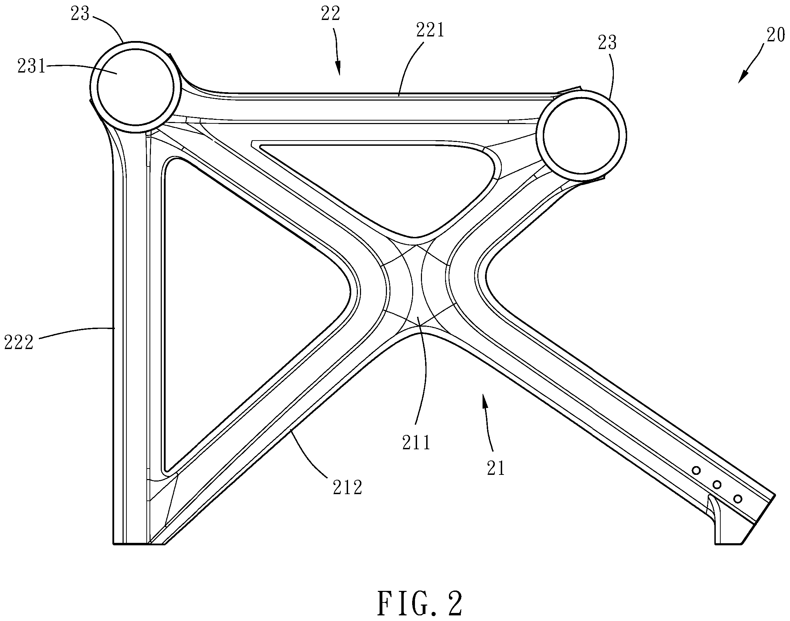

Step S6: At room temperature, let the mold and the carbon fiber prepregs in the heating and pressurizing machine for maintaining the pressure and cooling down. After that, remove the mold to obtain the aircraft seat leg 20 having hollow structure and formed integrally, as shown in FIG. 2. Room temperature cooling can avoid shrinkage deformation caused by fast cooling, and reduce the shrinkage rate of molding. The preferred temperature to remove the mold is 60°C-80°C, so that the state is just cured completely.

In this embodiment, the material is the carbon fiber prepreg with unidirectional long fibers. But the carbon fiber prepreg with woven long fibers may be chosen as the material, that is also adapted for manufacturing the aircraft seat leg through the above steps S1-S6.

Referring to FIG. 2 to FIG. 9, the aircraft seat leg 20 of the aircraft seat 10 of the present invention primarily includes a primary support frame 21, a secondary support frame 22 and two seat tube connectors 23, which are formed integrally. There is no additional connecting element disposed between the primary support frame 21, the secondary support frame 22 and the seat tube connectors 23, that improves the structural strength of the entirety.

The primary support frame 21 has a support point 211 and a plurality of support bars 212. An end of the plurality of support bars 212 are connected to the support point 211 so that the primary support frame 21 is X-shaped. This configuration design can provide great rigidity.

The secondary support frame 22 is L-shaped, and composed of a transverse support bar 221 and a vertical support bar 222. Another end of three of the support bars 212 of the primary support frame 21 are connected to two terminal ends and a central end of the secondary support frame 22 respectively. The transverse support bar 221 and the vertical support bar 222 of the secondary support frame 22 can assist the primary support frame 21 in bearing the sitting force of the passenger, making the aircraft seat leg 20 even firmer.

The two seat tube connectors 23 are formed at the end of two of the support bars 212 of the primary support frame 21, which are connected with the secondary support frame 22. Every seat tube connector 23 has a connecting hole 231 penetrating through the seat tube connector 23, such that the aircraft seat leg 20 has two connecting holes 231 in total.

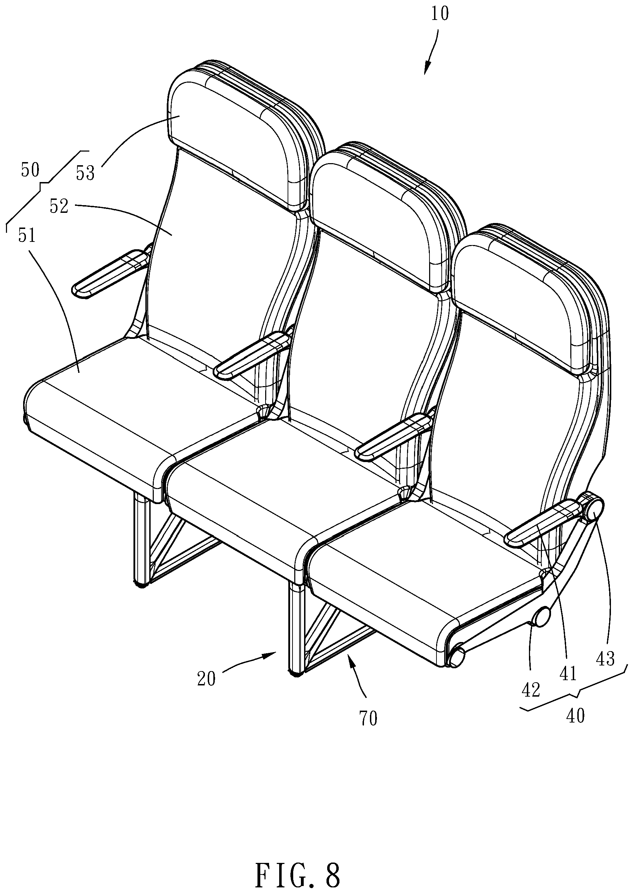

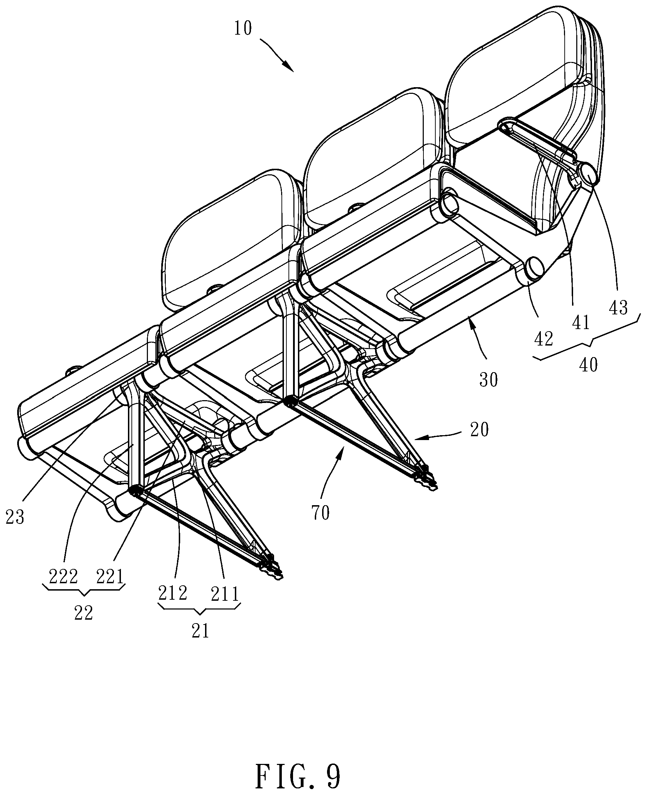

Except for the aircraft seat leg 20, the aircraft seat 10 also includes two seat tubes 30, an armrest frame 40 and a seat member 50, as shown in FIG. 8 and FIG. 9.

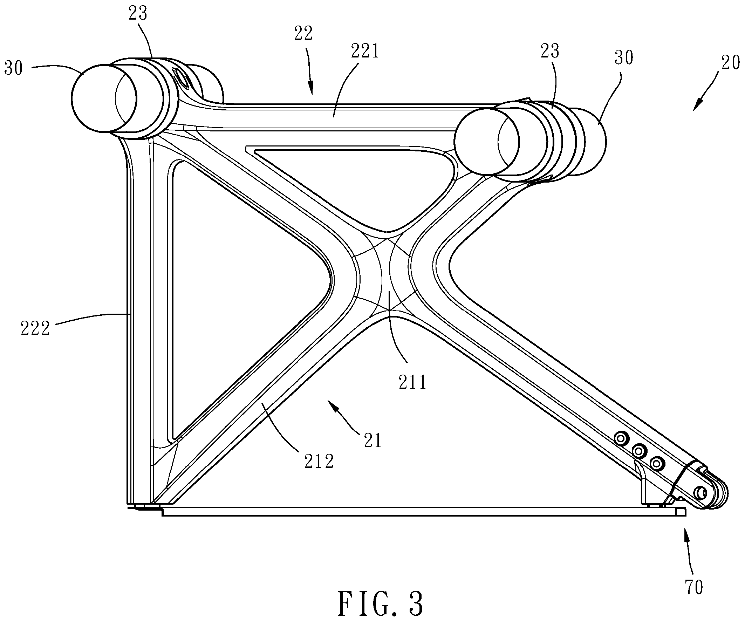

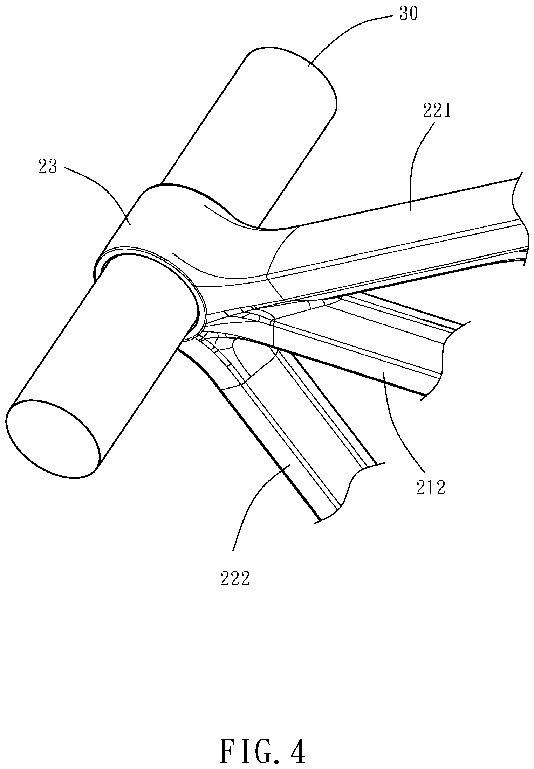

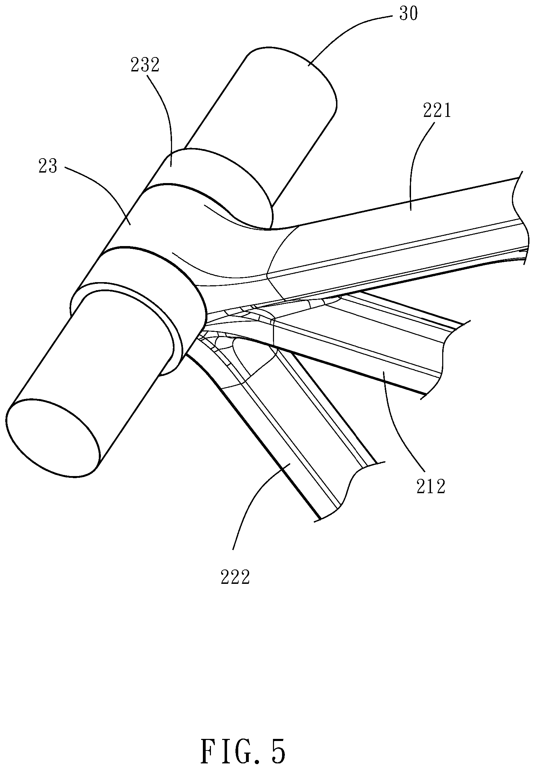

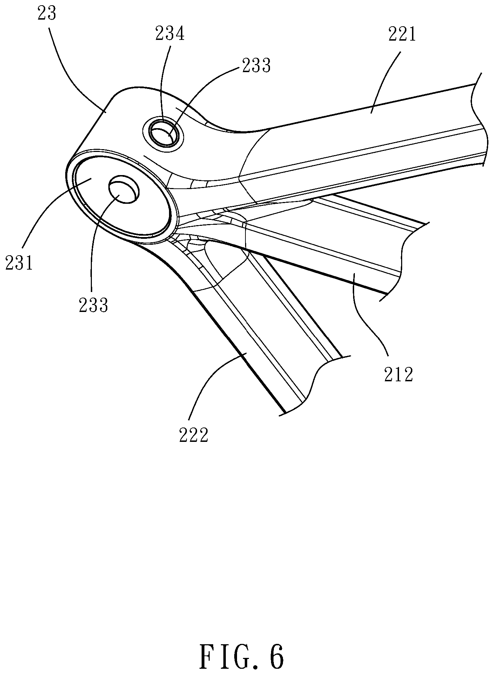

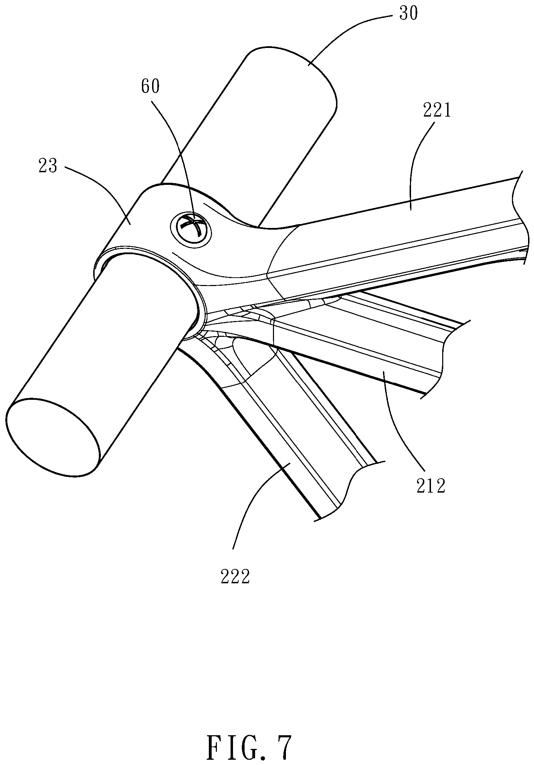

The two seat tubes 30 are inserted in the two connecting holes 231 of the aircraft seat leg 20 respectively, and fastened to the two seat tube connectors 23, as shown in FIG. 3. The material for manufacturing the two seat tubes 30 may be chosen as glass fiber, aluminum alloy or carbon fiber. The seat tube 30 made of glass fiber or aluminum alloy has great buffering property. The seat tube 30 made of carbon fiber has relatively better rigidity, that provides the aircraft seat 10 relatively higher strength. This embodiment provides a plurality of fastening manners for the seat tube connectors 23 and the seat tubes 30. One of them is as shown in FIG. 4, which is directly adhering the seat tubes 30 to the seat tube connectors 23. The outer surfaces of the seat tubes 30 and the inner surfaces of the seat tube connectors 23 are applied with resin glue (not shown), and then the seat tubes 30 are adhered to the seat tube connectors 23. This fastening manner can avoid drilling on the seat tube connectors 23 and the seat tubes 30, so that the structure of the aircraft seat leg 20 will not be damaged. The second one of the fastening manners is as shown in FIG. 5, wherein the seat tubes 30 and the seat tube connectors 23 are not only adhered by the resin glue. Two sides of the seat tube connector 23 are each further provided with a positionally limiting loop 232. The positionally limiting loops 232 are sleeved onto the seat tube 30 and tightly abutted against two sides of the seat tube connector 23, that increases the firmness of the seat tube 30 being fastened to the seat tube connector 23. This auxiliary fastening structure will not damage the structure of the aircraft seat leg 20 as well, and can prevent the seat tubes 30 from rotation or displacement resulted from insufficient adhering strength. The third one of the fastening manners is as shown in FIG. 6 and FIG. 7, wherein every seat tube connector 23 is provided with two fastening holes 233. The two fastening holes 233 are provided on two opposite sides of the seat tube connector 23 respectively. The fastening hole 233 penetrates through the seat tube connector 23 and communicates with the connecting hole 231. The seat tubes 30 are also formed with the associated through holes (not shown). When the seat tube 30 is inserted into the connecting hole 231, the two fastening holes 233 are aligned with the through holes, and fasteners 60 are inserted into the fastening holes 233 and the through holes and fastened. The fasteners 60 may be, for example, pins or combinations of screws and nuts, and the head portions of the fasteners 60 can be abutted on fastening planes 234 around the fastening holes 233. This fastening manner can improve the fastening strength for the seat tubes 30, that is the even firmer fastening manner. Furthermore, it is also an option to provide the positionally limiting loops 232 disposed on two sides of the seat tube connectors 23 with fastening holes (not shown), and insert fasteners (not shown) into the fastening holes of the positionally limiting loops 232 and the through holes of the seat tubes 30 and fastened, that is also a firm fastening manner.

The armrest frame 40 has an armrest portion 41 and two assembling holes 42 formed at the bottom side of the armrest portion 41. The armrest frame 40 is sleeved onto the two seat tubes 30 through the two assembling holes 42 respectively, so that the armrest frame 40 is combined with the seat tubes 30. The armrest portion 41 is rotatable about a rotational shaft 43 of the armrest frame 40, allowing the passenger to freely adjust the armrest portion 41 to use or not use it.

The seat member 50 has a seat bottom 51, a seat back 52 connected with the seat bottom 51, and a headrest 53 connected with the seat back 52. The front and rear ends of the bottom side of the seat bottom 51 have recessed portions for the front and rear ends of the seat bottom 51 to be engaged on the two seat tubes 30. There may be two armrest frames 40 disposed at two sides of a single seat member 50 for making the passenger feel more comfortable when sitting thereon.

As a result, after the assembly of the aircraft seat 10 is accomplished, it only needs to fasten the support bar 212 of the primary support frame 21 of the aircraft seat leg 20, which is not connected with the secondary support frame 22, and two ends of the aircraft seat leg 20, which are not formed with the seat tube connector 23, to the floor in the cabin through an installation structure 70, as shown in FIG. 3, FIG. 8 and FIG. 9. The aircraft seat leg 20 of the aircraft seat 10 of the present invention has the advantages of light weight and high structural strength, quite suitable for the use on aircrafts or other aerial vehicles.

In conclusion, the manufacturing method of the integrally formed aircraft seat leg provided by the present invention at least has the following advantages when compared with the existing technique.
1. In the manufacturing method of the integrally formed aircraft seat leg of the present invention, the folding process, the cutting process and the lay-up process can preform the carbon fiber prepregs into the external shape of the aircraft seat leg, that can make the subsequent molded finished product has more complete external shape. Besides, through the steps, the carbon fiber prepregs can be stacked according to size, and formed into the one-piece finished product.
2. In the manufacturing method of the integrally formed aircraft seat leg of the present invention, the aircraft seat leg is formed through the preforming process and the thermal curing process, and cools down at room temperature before the mold is removed, that can lower the shrinkage rate of molding, bringing the aircraft seat leg relatively higher completeness.
3. As to the aircraft seat leg of the present invention, the structure of the primary support frame thereof can provide relatively higher structural strength, and it is an integrally formed design requiring no connecting element to combine the primary support frame, the secondary support frame and the seat tube connectors. Because of having no joint, the aircraft seat leg has highly improved structural strength, that is quite suitable for the aircraft seat and can effectively increase the safety in structure.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A manufacturing method of an integrally formed aircraft seat leg, the manufacturing method being **characterized in** comprising the steps of:
A) taking a plurality of carbon fiber prepregs which have long fiber structure, a folding process being performed to the plurality of carbon fiber prepregs to make the plurality of carbon fiber prepregs preformed with stacking angles according to bends of an external shape of an aircraft seat leg (20);
B) performing a cutting process to the plurality of carbon fiber prepregs that have gone through the folding process;
C) performing a lay-up process by stacking the plurality of carbon fiber prepregs in a jig according to stacking design of the aircraft seat leg (20);
D) performing a preforming process, in a mold, to the plurality of carbon fiber prepregs that have gone through the lay-up process;
E) performing a thermal curing process by preheating and pre-pressurizing the mold with the plurality of carbon fiber prepregs, wherein the plurality of carbon fiber prepregs comprise thermoplastic material or thermosetting material, and then molding the plurality of carbon fiber prepregs by heating and pressurizing; and
F) cooling down at room temperature and then removing the mold, thereby obtaining the aircraft seat leg (20), the aircraft seat leg (20) being formed integrally and hollow in structure.

2. The manufacturing method as claimed in claim 1, which is **characterized in that** the plurality of carbon fiber prepregs have the structure with unidirectional long fibers or woven long fibers.

3. The manufacturing method as claimed in claim 1 or 2, which is **characterized in that** in the cutting process in the step B, the plurality of carbon fiber prepregs are cut according to size of the stacking design of the aircraft seat leg (20), then numbered and marked with the stacking angles.

4. The manufacturing method as claimed in anyone of claims 1-3, which is **characterized in that** in the thermal curing process in the step E, a heating and pressurizing machine is preheated to 130°C-220°C, and then the mold with the plurality of carbon fiber prepregs is placed into the heating and pressurizing machine to be preheated and pre-pressurized.

5. The manufacturing method as claimed in anyone of claims 1-4, which is **characterized in that** in the thermal curing process in the step E, the plurality of carbon fiber prepregs in the mold is pressurized by inflation with a pressure of 7-14 kg/cm², and heated by a temperature of 130°C-220°C.

6. The manufacturing method as claimed in anyone of claims 1-5, which is **characterized in that** in the step F, the mold and the plurality of carbon fiber prepregs are waited for cooling down at room temperature to a temperature of 60°C-80°C.

7. An aircraft seat leg (20) manufactured by the manufacturing method as claimed in anyone of claims 1-6, the aircraft seat leg (20) being **characterized in** comprising:
a primary support frame (21) having a support point (211) and a plurality of support bars (212), an end of the plurality of support bars (212) being connected to the support point (211);
a secondary support frame (22) connected to another end of a plurality of said support bars (212) of the primary support frame (21); and
two seat tube connectors (23) formed at the primary support frame's (21) a plurality of said support bars' (212) said end connected with the secondary support frame (22), every said seat tube connector (23) having a connecting hole (231) penetrating through the seat tube connector (23).

8. The aircraft seat leg (20) as claimed in claim 7, which is **characterized in that** the two seat tube connectors (23) further have a plurality of fastening holes (233); the plurality of fastening holes (233) communicate with the connecting hole (231).

9. The aircraft seat leg (20) as claimed in claim 8, which is **characterized in that** the two seat tube connectors (23) are further formed with fastening planes (234) around every said fastening hole (233).

10. An aircraft seat (10), the aircraft seat (10) being **characterized in** comprising:
an aircraft seat leg (20) manufactured by the manufacturing method as claimed in anyone of claims 1-6, the aircraft seat leg (20) having a primary support frame (21), a secondary support frame (22) and two seat tube connectors (23), the primary support frame (21) comprising a support point (211) and a plurality of support bars (212), an end of the plurality of support bars (212) being connected to the support point (211), the secondary support frame (22) being connected to another end of a plurality of said support bars (212) of the primary support frame (21), the two seat tube connectors (23) being formed at the primary support frame's (21) a plurality of said support bars' (212) said end connected with the secondary support frame (22), every said seat tube connector (23) having a connecting hole (231) penetrating through the seat tube connector (23);
two seat tubes (30) inserted in the connecting holes (231) of the two seat tube connectors (23) of the aircraft seat leg (20) respectively, the two seat tubes (30) being fastened to the two seat tube connectors (23) respectively;
an armrest frame (40) having an armrest portion (41) and two assembling holes (42) formed at a bottom side of the armrest portion (41), the armrest frame (40) being sleeved onto the two seat tubes (30) through the two assembling holes (42) respectively; and
a seat member (50) having a seat bottom (51), a seat back (52) connected with the seat bottom (51) and a headrest (53) connected with the seat back (52), two ends of the seat bottom (51) being connected to the two seat tubes (30) respectively.

11. The aircraft seat (10) as claimed in claim 10, which is **characterized in that** outer surfaces of the two seat tubes (30) are adhered to inner surfaces of the two seat tube connectors (23).

12. The aircraft seat (10) as claimed in claim 11, which is **characterized in that** a plurality of positionally limiting loops (232) are disposed on two sides of the two seat tube connectors (23); the plurality of positionally limiting loops (232) are sleeved onto the two seat tubes (30) and tightly abutted against said two sides of the two seat tube connectors (23).

13. The aircraft seat (10) as claimed in claim 10, which is **characterized in that** the two seat tube connectors (23) of the aircraft seat leg (20) further has a plurality of fastening holes (233); the plurality of fastening holes (233) communicate with the connecting hole (231) so that the two seat tubes (30) are connected with the two seat tube connectors (23) by fasteners (60) inserted in the plurality of fastening holes (233).

14. The aircraft seat (10) as claimed in claim 13, which is **characterized in that** the two seat tube connectors (23) of the aircraft seat leg (20) are further formed with fastening planes (234) around every said fastening hole (233).

15. The aircraft seat (10) as claimed in anyone of claims 10-14, which is **characterized in that** material of the two seat tubes (30) is glass fiber, aluminum alloy or carbon fiber.
